# EUROPEAN PATENT APPLICATION

(11) **EP 4 415 412 A1**
(43) Date of publication of application: **14.08.2024**
(21) Application number: 23155405.6
(22) Date of filing: 07.02.2023
(51) Int. Cl.: H04W 24/02, H04W 24/08

(54) **A METHOD FOR DETERMINING A QUALITY OF A WIRELESS NETWORK CONNECTION IN A PREDEFINED AREA, COMPUTER PROGRAM PRODUCT, COMPUTER-READABLE STORAGE MEDIUM AS WELL AS A MONITORING SYSTEM**

(71) Applicant: Siemens Aktiengesellschaft, 80333 München (DE)
(72) Inventor: Michailow, Nicola, 81825 München (DE); Reisacher, Marco, 81669 München (DE)
(74) Representative: Siemens Patent Attorneys

(57) **Abstract**

The invention relates to a method for determining a quality of a wireless network connection (38) in a predefined area (34) by a monitoring system (10) for the area (34), comprising the steps of providing an automated moving device (12) for the area (34), wherein the automated moving device (12) comprises at least one receiving device and one electronic computing device (14); generating a control signal (32) for monitoring the area (34) by an further electronic computing device (26) of the monitoring system (10); transmitting the control signal (32) to the automated moving device (12); automated moving of the automated moving device (12) through the area (34) depending on the transmitted control signal (32) and capturing a plurality of network connection signals of the wireless network connection (38) at a plurality of locations in the area (34) by the receiving device; and analyzing the plurality of network connection signals by the electronic computing device (14) and depending on the analyzed network connection signals determining the quality of the network connection (38). Furthermore, the invention relates to a computer program product, a computer-readable storage medium as well as to a monitoring system (10) .

## Description

The invention relates to a method for determining a quality of a wireless network connection in a predefined area by a monitoring system of the area. Furthermore, the present invention relates to a corresponding computer program product, a corresponding computer-readable storage medium as well as to a corresponding monitoring system.

Wireless networks, especially in, for example, industrial environments, need to provide high availability, low latency, and resiliency to bursts in activity. There are several different technologies, like MU-MIMO (Multiuser Multiple Input, Multiple Output) to increase the capacity of users per access. However, once an access point is overwhelmed by the received amount of data or clients or malfunctions, none of these methods can prevent service degradation to the end user.

As of today, monitoring of a network service quality is done by monitoring, for example, passively with, for example, tcpdump or actively, for example, with agents, at selected network nodes. In wired network segments, such nodes have a predefined, static position in space. In wireless network segments, base stations or access points usually have a static position. Mobile terminals are at the present location of the human or robotic user that is consuming said service.

It is an object of the invention to provide a method, a computer program product, a computer-readable storage medium as well as a monitoring system, by which a quality of a wireless network connection in a predefined area may be determined.

This object is solved by a method, a computer program product, a computer-readable storage medium as well as a monitoring system according to the independent claims. Advantageous embodiments are presented by the dependent claims.

One aspect of the invention relates to a method for determining a quality of a wireless network connection in a predefined area by a monitoring system for the area. An automated moving device for the area is provided, wherein the automated moving device comprises at least one receiving device and one electronic computing device. A control signal for monitoring the area by a further electronic computing device of the monitoring system is generated. The control signal is transmitted to the automated moving device. An automated moving of the automated moving device through the area depending on the transmitted control signal is provided and capturing a plurality of network connection signals of the wireless network connection at a plurality of locations in the area by the receiving device is performed. The plurality of network connection signals is analyzed by the electronic computing device and depending on the analyzed network connection signals determining the quality of the network connection is determined.

Therefore, a method to monitor the service coverage and, for example, automatically provision of additional base stations to mitigate the possible degradation is provided. The service coverage may also be regarded to as the quality of the wireless network connection.

Therefore, a network service monitoring entity, in particular a software, may instruct the robotic platform, which may be regarded as the automated moving device, which is not a service consumer, to relocate two, for example, given physical locations and perform service monitoring at that location.

For example, once a service degradation is detected, several technologies enhance the wireless experience of an end point device. Multi-user multiple-input, multiple-output (MU-MIMO), for example, allows the access point to talk to several clients in parallel, reducing waiting times and increasing throughout or minimizing latency. On the other hand, band steering can switch support devices to, for example, 5 GHz or Wi-Fi bands to allow faster communication. Of course, all the above means to enhance the user experience are tight to physical constraints.

These constraints are the overall airtime an access point can use or other limits, such as the speed of the cable running to each access point.

Therefore, the invention describes a method for active ad-hoc provisioning of network services in wireless networks, at the physical location where there is, for example, a degradation/fault, by means of autonomous robotic relaying platforms.

According to an embodiment, an availability of the wireless network connection and/or an availability of other network devices in the area and/or a throughput of the wireless network connection and/or a latency of the wireless network connection and/or a packet loss in the wireless network connection and/or a loading time in the wireless network connection and/or an age of an information in the wireless network connection is analyzed for determining the quality. For example, as a predefined area an industrial environment, for example a factory, is provided. At each time instant, numerous critical, for example soft-PLC, and best effort, for example surveillance camera, services are reduced. These services can range from internet access to file services to highly critical machine control flows for manufacturing. The objective is to ensure that service consumers can access given services, especially critical ones, within the corresponding quality of services (QoS) requirements. These requirements expand typical network-related matrices and can consist of the general availability of the wireless network, the availability of other network devices, for example servers for web applications, the throughput, latency, the packet loss, loading times, for example for web surface, and the age of information. According to an embodiment of the invention, a method to quantify expected service quality in the wireless segments of a network is provided as well as, for example, a method to ensure these requirements continue to be satisfied in the event of service degradation, for example, due to overload physical downtime.

In another embodiment, the quality of the wireless network connection is determined by the electronic computing device and transmitted to the further electronic computing device or the quality of the wireless network connection is determined by the further electronic computing device, wherein raw data of the network connection signals are transmitted by the electronic computing device to the further electronic computing device. In particular, the raw data are preprocessed data of the receiving device. Therefore, the determining of the quality may be performed by the automated moving device or by the further electronic computing device.

In another embodiment, a trajectory to be followed by the automated moving device through the area is provided by the further electronic computing device. For example, the trajectory may be a determined plurality of way points, in particular along the trajectory, wherein the trajectory may for example lead to several access points in the area. Furthermore, the trajectory may be provided in order to mitigate collisions with objects in the area. Alternatively, the automated moving device may comprise further capturing devices for capturing surroundings of the automated moving device and may automatically navigate through the area by itself.

In another embodiment, the area comprises a plurality of access points for providing the wireless network connection and the automated moving device captures the plurality of network signals from the plurality of access points. For example, the automated moving device may drive by the access points and captures the plurality of network signals along its trajectory, wherein the moving of the automated moving device may capture the different locations covered by the plurality of access points. Therefore, the automated moving device may check the quality of the wireless network connection of each of the access points.

In another embodiment, the automated moving device is an airborne moving device, for example, the automated moving device may be a drone. This has the advantage that the automated moving device may navigate through the area in an efficient way without disturbing, for example, persons in the area. Furthermore, the airborne moving device has the advantage that also the quality of the wireless network connection may be determined in a z-direction, in particular in a height of the area. Therefore, a higher quality of the determination of the quality of the wireless network connection can be provided.

In another embodiment, the automated moving device is a ground based moving device. For example, the ground based moving device may be a robot comprising wheels steering through the area. Therefore, an easy automated moving device may be provided.

In another embodiment, the control signal is generated in predefined time intervals and/or depending on an input of an operator of the monitoring system. For example, the control signal may be generated two times a day and the quality of network connection may be monitored two times a day. Furthermore, it is possible, that, for example an operator of the monitoring device inputs the control signal in an input device, and the further electronic computing device generates the control signal in order to start monitoring the quality of the wireless network connection. Therefore, different triggers may be provided in order to check the quality of the wireless network connection in the area.

In another embodiment, the monitoring system comprises an area capturing device, wherein a change in the area is determined by the area capturing device, and wherein depending on the determined change the control signal is generated by the further electronic computing device. For example, the area capturing device may be a camera. For example, a new machine may be installed at the area. This new machine may have an influence of the quality of the wireless network connection in the area. The camera may determine the new installation and may trigger generating the control signal in order to check the quality of the wireless network connection with the new installed machine. Therefore, after an installation of a machine, an automated way for checking the quality of network connection is provided.

Furthermore, a position for a connection device to raise the quality at the degraded location is determined by the further electronic computing device.

In another embodiment, depending on the determined quality, the monitoring system determines a countermeasure for raising the quality of the wireless network connection at a location with a degraded quality. For example, the automated moving device may comprise a connection device for raising the quality for the wireless network connection, and the automated moving device is commanded to the location with a degraded quality by the further electronic computing device to raise the quality and/or a further automated moving device of the monitoring system comprising a connection device for raising the quality of the wireless network connection is provided, and the further automated moving device is commanded to the location with a degraded quality by the further electronic computing device to raise the quality. For example, if the network service quality is not satisfactory, for example is lower than a given threshold, at a given location, the robotic monitoring platform, in particular the monitoring system, may either autonomously decide to initiate countermeasures or report the findings to the further electronic computing device that will decide if further actions are required. Autonomous countermeasures may include temporary source provisioning, for example, the automated moving device may use its own wireless interface to extend service coverage, such as relaying. Alternatively, the monitoring system may trigger one or more airborne or ground-based vehicles to be deployed to accomplish the relaying task. The number relays needed can be either calculated from the known positions of the other access points, and the position of the relays, for example based on signal strength measurements taken by the monitoring entity.

In particular, the presented method is a computer-implemented method. Therefore, another aspect of the invention relates to a computer program product comprising program code means for performing a method according to the preceding aspect. Furthermore, the invention relates to a computer-readable storage medium comprising at least a computer program product according to the preceding aspect.

A still further aspect of the invention relates to a monitoring system for an area for determining a quality of a wireless network connection in the area, comprising at least one automated moving device and one further electronic computing device, wherein the monitoring system is configured for performing a method according to the preceding aspect. In particular, the method is performed by the monitoring system.

The further electronic computing device as well as the electronic computing device may comprise electronic means, for example processors, circuits, in particular integrated circuits, and further means, for performing a method according to the preceding aspect.

Advantageous forms of configuration of the method are to be regarded as advantageous forms of the computer program product, the computer-readable storage medium as well as the monitoring system. The monitoring system therefore comprises means for performing the method.

Further features of the invention result from the claims, the figures and the figure description. The features and combinations of features mentioned above in the description, as well as the features and combinations of features mentioned below in the figure description and/or shown alone in the figures, can be used not only in the combination indicated in each case, but also in other combinations without departing from the scope of the invention.

The invention will now be explained in more detail with reference to preferred examples of embodiments and with reference to the accompanying drawings.

Therefore,
- FIG 1: shows a schematic block diagram according to an embodiment of a monitoring system;
- FIG 2: shows a schematic top view to an area comprising an embodiment of the monitoring system; and
- FIG 3: shows another schematic top view of a part of the area shown in FIG 2 with an embodiment of the monitoring system.

In the figures, same elements are shown with the same reference signs.

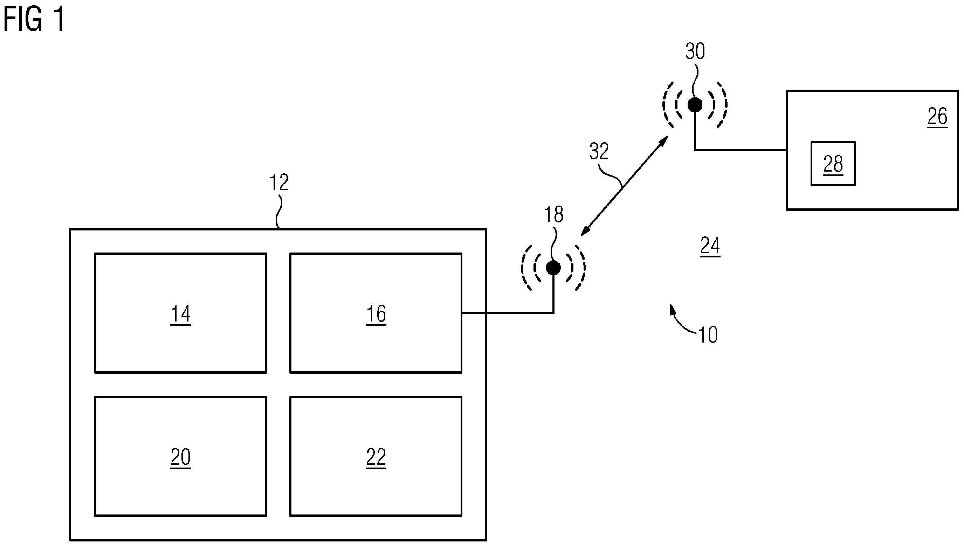

FIG 1 shows a schematic block diagram according to an embodiment of a monitoring system 10. The monitoring system 10 comprises at least one automated moving device 12. The automated moving device 12 in the shown embodiment comprises an electronic computing device 14, a communication module 16 with an antenna 18, an energy source 20 as well as a, for example, further sensor 22, for example, for capturing surroundings 24. For example, the sensors 22 may be a camera, a lidar sensor or furthermore. Furthermore, also actuators may be arranged, for example wheels, rotors, or motors.

The monitoring system 10 comprises at least a further electronic computing device 26. The further electronic computing device 26 may comprise a further communication module 28 with an antenna 30. In particular, with the further electronic computing device 26 a control signal 32 may be transmitted from the further electronic computing device 26 to the automated moving device 12.

The automated moving device 12 may be, for example, an airborne moving device, for example a drone, or alternatively, the automated moving device 12 may be a ground based moving device.

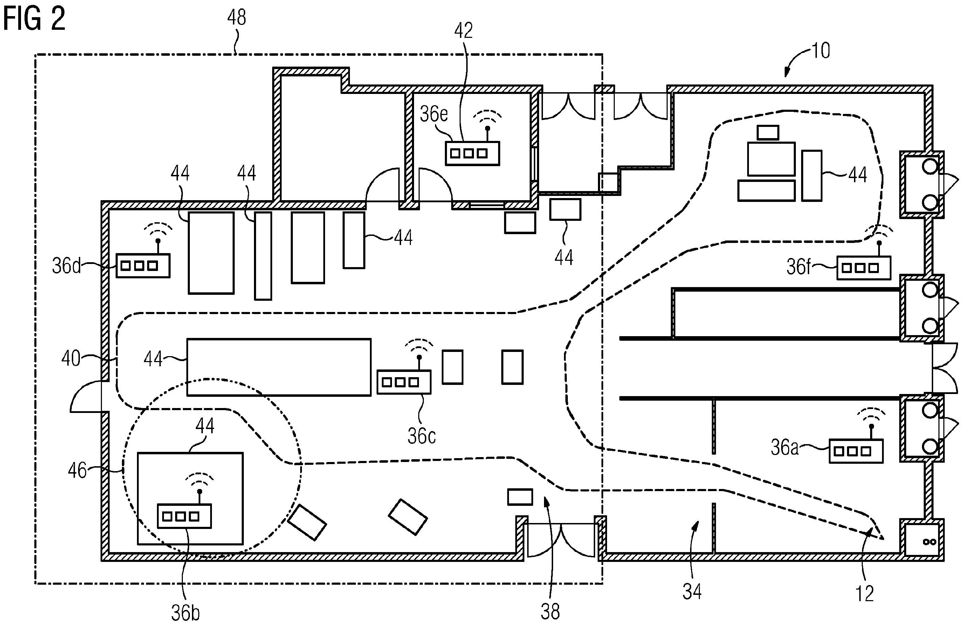

FIG 2 shows a top view of a predefined area 34, for example an industrial environment. The area 34 comprises a plurality of access points 36a, 36b, 36c, 36d, 36e and 36f.

According to an embodiment of the method, a quality of a wireless network connection 38 in the predefined area 34 is determined by the monitoring system 10. The automated moving device 12 is provided for the area 34, wherein the automated moving device 12 comprises at least one receiving device, for example the antenna 18, and the electronic computing device 14. The control signal 32 for monitoring the area 34 is generated by the further electronic computing device 26. The control signal 32 is transmitted to the automated moving device 12. An automated moving of the automated moving device 12 through the area 34 depending on the transmitted control signal 32 is provided and a plurality of network connection signals of the wireless network connection 38 at a plurality of locations at the area 34 is captured by the receiving device. The plurality of network connection signals is analyzed by the electronic computing device 14 and depending on the analyzed network connection signals the quality of the network connection 38 is determined.

The quality of the wireless network connection 38 may be determined by the electronic computing device 14 and then transmitting to the further electronic computing device 26, or the quality of the wireless network connection 38 may be determined by the further electronic computing device 26, wherein, for example, raw data of the network connection signals are transmitted by the electronic computing device 14 to the further electronic computing device 26.

Furthermore, it is shown that a trajectory 40, in particular a plurality of way points for the trajectory 40, to follow for the automated moving device 12 through the area 34 is provided by the further electronic computing device 26.

As shown in FIG 2, the area 34 comprises the plurality of access points 36a-36f for providing the wireless network connection 38, and the automated moving device 12 captures the plurality of network signals from the plurality of access points 36a-36f.

The control signal 32 may be generated in predefined time intervals and/or depending on an input of an operator of the monitoring system 10. Furthermore, the monitoring system 10 comprises an area capturing device 42, for example a camera, wherein a change in the area 34 is determined by the area capturing device 42, and wherein depending on the determined change the control signal 32 is generated by the further electronic computing device 26.

In particular, at each time instant numerous critical, for example soft-PLC, and best effort, for example surveillance camera, services are in use in the area 34, which may be, for example, a factory. These services can range from internet access to file services to highly critical machine control flows for manufacturing. The objective is to ensure that service consumers can access given services, especially critical ones, within the corresponding quality of services (QoS) requirements.

These requirements expand typical network-related matrices and can consist of the general availability of the wireless network, an availability of other networks, for example service for web applications, a throughput, a latency, a packet loss, loading times, for example for web surfaces, and the age of information.

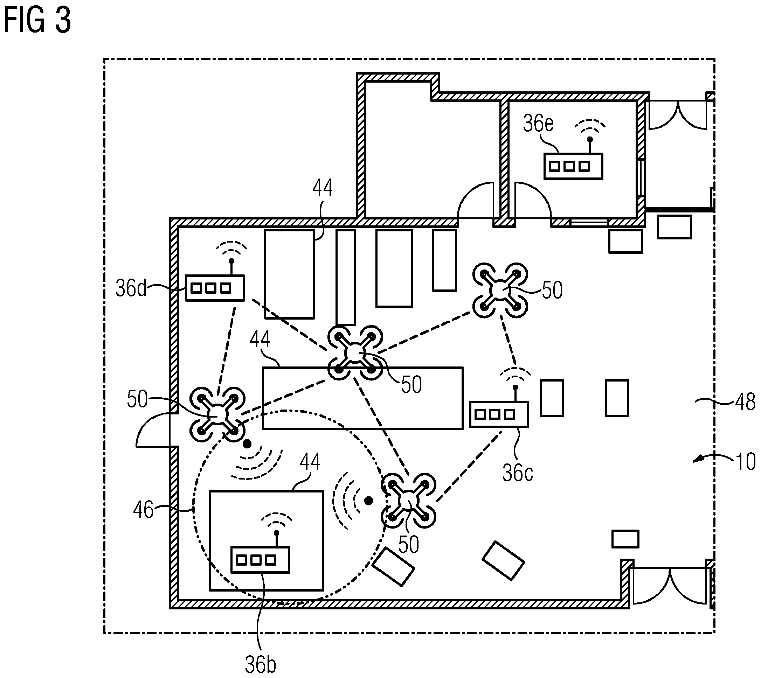

According to the shown embodiment, a method to quantify expected service quality in the wireless network segments of a network is shown. Furthermore, in particular, according to FIG 3, a method to ensure these requirements continue to be satisfied in the event of a service degradation, for example due to overload physical downtime, is presented.

Specifically, the focus is to detect and prevent service degradation for mobile users in wireless network segments. This task shall be performed in unsupervised manner by an unmanned robotic entity, in particular by the automated moving device 12. The automated moving device 12 is configured to autonomous relocate in space/area 34. Furthermore, it carries one or more sensors, for example wireless transceivers, which are used to quantify service quality at given location.

Meta-parameters of the service monitoring method can be, for example, way points to cover, details of the equipment it has to check, for example access point login information, or services it has to check, including QoS-requirements for each services.

FIG 2 depicts an example factory layout with various base stations/access points 36a-36f. The trajectory 40 marks the route of the autonomous moving device 12 could take to gather its data. It is obvious for the person skilled in the art that also other trajectories 40, for example just in part of the area 34, may be provided, depending on, for example, a change in the area 34. During this sweep, the automated moving device 12 connects to the shown base station's access points 36a-36f, measuring the end-to-end quality of the network services at the given location in space.

In the shown embodiment, for example the access point 36b, does not have the quality, as wished. In particular, the quality of the access point 36b is below a given threshold. If the network service quality is not satisfactory, in particular below the given threshold, at a given location, the automated moving device 12, which may be also regarded as a robotic monitoring platform, may either autonomously decide to initiate countermeasures or report the findings to the further electronic computing device 26 which may be a central network management system, that decides if further actions are required. The degraded area is in particular shown with the reference signs 46.

FIG 3 shows an enlarged view of the area 34, which is shown in FIG 2 with the reference sign 48. In particular, it is shown that, for example, a plurality of further automated moving devices 50, in particular drones, may be also be provided by the monitoring system 10. In particular, FIG 3 shows that depending on the determined quality, the monitoring system 10 determines a countermeasure for raising the quality of the wireless network connection 38 at a location 46 with a degraded quality. For example, the automated moving device 12 comprises a connection device for raising the quality of the wireless network connection 38, and the automated moving device 12 is commanded to the location 46 with the degraded quality by the further electronic computing device 26 to raise the quality and/or, as shown in FIG 3, at least the one further automated moving device 50 of the monitoring system 10 comprising a connection device for raising the quality of the wireless network connection 38 is provided, and the further automated moving device 50 is commanded to the location 46 with the degraded quality by the further electronic computing device 26 to raise the quality. In particular, as shown in FIG 3, a plurality of further automated moving devices 50 is shown because, for example, due to objects 44 in the surroundings 24/the area 34, it is needed that the signals from the access points 36c, 36d, 36e has to be relayed by the plurality of further automated moving devices 50.

Furthermore, a position for a connection device to raise the quality at the degraded location 46 is determined by the further electronic computing device 26.

In particular, a scenario for a countermeasure is shown in FIG 3, where one of the access points 36b near, for example a machine, degrades the availability of necessary services in the local area 34. Other radio stations are too far away to take over the load due to the lower performance over the distance, or, in particular, because of obstacles 44. This instance is an example in which the operator would decide to support the infrastructure activity. Autonomous countermeasures may include temporary source provisioning, for example, the further automated moving devices 50, which may be also regarded as robotic monitoring platforms, wherein they may use their own wireless interfaces to extend the service coverage, a so-called relaying.

Alternatively, the monitoring system may trigger one or more airborne or ground-based vehicles to be deployed to accomplish the relaying task. The number of relays needed can be either calculated by the known positions of the other access points 36a - 36f, and the position of the relays, for example based on signal strength measurements taken by the monitoring entity.

FIG 3 shows an example, where the monitoring system 10 sends four further automated moving devices 50 to connect the nearest three access points 36c, 36d, 36e to connect to the extend network service coverage in wireless networks, for example by forming a mash network of relays, covering the underprovisioned area, in particular the degraded location 46.

## Claims

1. A method for determining a quality of a wireless network connection (38) in a predefined area (34) by a monitoring system (10) for the area (34), comprising the steps of:
- providing an automated moving device (12) for the area (34), wherein the automated moving device (12) comprises at least one receiving device and one electronic computing device (14);
- generating a control signal (32) for monitoring the area (34) by an further electronic computing device (26) of the monitoring system (10);
- transmitting the control signal (32) to the automated moving device (12);
- automated moving of the automated moving device (12) through the area (34) depending on the transmitted control signal (32) and capturing a plurality of network connection signals of the wireless network connection (38) at a plurality of locations in the area (34) by the receiving device; and
- analyzing the plurality of network connection signals by the electronic computing device (14) and depending on the analyzed network connection signals determining the quality of the network connection (38).

2. The method according to claim 1, wherein an availability of the wireless network connection (38) and/or an availability of other network devices in the area (34) and/or a throughput of the wireless network connection (38) and/or a latency of the wireless network connection (38) and/or a packet loss in the wireless network connection (38) and/or a loading time in the wireless network connection (38) and/or an age of an information in the wireless network connection (38) is analyzed for determining the quality.

3. The method according to claim 1 or 2, wherein the quality of the wireless network connection (38) is determined by the electronic computing device (14) and transmitted to the further electronic computing device (26) or the quality of the wireless network connection (38) is determined by the further electronic computing device (28), wherein raw data of the network connection signals are transmitted by the electronic computing device (14) to the further electronic computing device (26).

4. The method according to any of claims 1 to 3, wherein a trajectory (40) to be followed by the automated moving device (12) through the area (34) is provided by the further electronic computing device (26).

5. The method according to any of claims 1 to 4, wherein the area (34) comprises a plurality of access points (36a - 36f) for providing the wireless network connection (38) and the automated moving device (12) captures the plurality of network signals from the plurality of access points (36a - 36f) .

6. The method according to any of claims 1 to 5, wherein the automated moving device (12) is an airborne moving device.

7. The method according to any of claims 1 to 5, wherein the automated moving device (12) is a ground based moving device.

8. The method according to any of claims 1 to 7, wherein the control signal (32) is generated in predefined time intervals and/or depending on an input of an operator of the monitoring system (10).

9. The method according to any of claims 1 to 8, wherein the monitoring system (10) comprises an area capturing device (42), wherein a change in the area (34) is determined by the area capturing device (42), and wherein depending on the determined change the control signal (32) is generated by the further electronic computing device (26).

10. The method according to any of claims 1 to 9, wherein depending on the determined quality, the monitoring system (10) determines a countermeasure for raising the quality of the wireless network connection (38) at a location (46) with a degraded quality.

11. The method according to claim 10, wherein the automated moving device (12) comprises a connection device for raising the quality of the wireless network connection (38) and the automated moving device (12) is commanded to the location (46) with the degraded quality by the further electronic computing device (26) to raise the quality and/or at least one further automated moving device (50) of the monitoring system (10) comprising a connection device for raising the quality of the wireless network connection (38) is provided and the further automated moving device (50) is commanded to the location (46) with the degraded quality by the further electronic computing device (26) to raise the quality.

12. The method according to claim 10 or 11, wherein a position for a connection device to raise the quality at the degraded location (46) is determined by the further electronic computing device (26).

13. A computer program product comprising program code means for performing a method according to any of claims 1 to 12.

14. A computer-readable storage medium comprising at least a computer program product according to claim 13.

15. A monitoring system (10) for an area (34) for determining a quality of a wireless network connection (38) in the area (34), comprising at least one automated moving device (12) and one further electronic computing device (26), wherein the monitoring system (10) is configured for performing a method according to any of claims 1 to 12.
